# EUROPEAN PATENT SPECIFICATION

(11) **EP 4 372 920 B1**
(45) Date of publication and mention of the grant of the patent: **21.10.2026**
(21) Application number: 22841489.2
(22) Date of filing: 15.07.2022
(51) Int. Cl.: H01R 4/62, H01R 11/05, H01R 13/03, H01R 13/11, H01R 43/02

(54) **PLUG-IN TERMINAL, PLUG-IN CONNECTION STRUCTURE, AND PLUG-IN TERMINAL ASSEMBLY**
STECKKLEMME, STECKVERBINDUNGSSTRUKTUR UND STECKKLEMMENANORDNUNG
BORNE ENFICHABLE, STRUCTURE DE CONNEXION ENFICHABLE ET ENSEMBLE BORNE ENFICHABLE

(30) Priority: 15.07.2021 CN 202110803188; 15.07.2021 CN 202121613410 U
(43) Date of publication of application: 22.05.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2022/105968
(87) International publication number: WO 2023/284856

(56) References cited:
- EP-B1- 1 623 485
- WO-A1-2017/195013
- CN-A- 101 834 370
- CN-A- 104 682 059
- CN-A- 104 919 659
- CN-A- 105 580 213
- CN-A- 112 436 327
- CN-A- 113 410 687
- CN-U- 203 800 335
- CN-U- 206 893 853
- CN-U- 207 217 835
- CN-U- 209 561 670
- CN-U- 212 725 666
- CN-Y- 201 207 475
- JP-A- 2018 156 896
- US-A- 2 346 831
- US-A1- 2018 205 167

## Description

### RELATED APPLICATIONS

The present disclosure claims priority to Chinese Patent Application No. 202110803188.3 filed on July 15, 2021, and also claims priority to Chinese Utility Model Patent Application No. 202121613410.5 filed on July 15, 2021.

### TECHNICAL FIELD

The present disclosure relates to the technical field of electrical connections, in particular to a plug-in terminal, a mating plug-in connection structure, and a plug-in terminal assembly.

### BACKGROUND

Electric vehicles require a charging gun to be inserted into a charging socket during charging. In the latest Chinese national standards currently released, forces in the entire process of a power plug is plugged into or unplugged from a power socket, and forces in the entire process of plugging or unplugging a vehicle plug into or from a vehicle socket should meet the requirements of national standards, while a resistance after plugging a terminal and a temperature rise in operations need to meet the requirements of the standards. In fact, the connector currently available on the market is mostly in the form of wire spring socket and bow piece with a rather complicated structure, and most of the contact resistance and temperature rise in use cannot meet the requirements, there have been a number of cases of vehicle burnout or localized component damage, accidents causing injury or death to persons and damage to vehicles, resulting from problems such as plug-in structure, temperature rise and contact resistance. A multiple piece contact for an electrical connector is known from the prior art, for example from US2018/205167A1. A copper-aluminum composite connection technology terminal is known from the prior art, for example from CN209561670U. A terminal and connector are known from the prior art, for example from JP2018156896A. A leaf spring contact socket is known from the prior art, for example from CN20120747Y. An electrical connector is known from the prior art, for example from CN203800335U. A connector terminal assembly with additional contacting surface is known from the prior art, for example from WO2017/195013A1. A bimetallic Cu-Al terminal is known from the prior art, for example from CN212725666U. A high-temperature resistant rectangular electrical connector is known from the prior art, for example from CN101834370A. Electrical connection means are known from the prior art, for example from US2346831A, which discloses a plug terminal with the features of the preamble of claim 1. A biased socket contact and a method thereof are known from the prior art, for example from EP1623485B1.

Therefore, there is an urgent need for a new solution in the prior art to solve the above problems.

### SUMMARY

The present invention is defined by the independent claim 1. Further embodiments are set forth in the dependent claims. Any references to inventions or embodiments not falling within the scope of the independent claims are to be interpreted as examples useful for understanding the invention. The present disclosure provides a plug-in terminal, a mating plug-in connection structure, and a plug-in terminal assembly to solve the existing problem that the plug-in terminal cannot meet the mechanical requirements and temperature rise requirements.

An embodiment according to a first aspect of the present disclosure provides a plug-in terminal, including: a connecting end and a plug-in end; the plug-in end includes: a fixing unit and an elastic unit, and the fixing unit is configured to be provided on a coupling device; the connecting end includes two ends, one end of the connecting end is electrically connectable to a cable, and the other end of the connecting end is connected to the fixing unit; and the elastic unit is provided with an expansion and contraction insertion hole for the plugging in and electrical connection with a mating terminal. The elastic unit comprises an expansion and contraction joint of the plug-in terminal extending in a longitudinal direction, and the expansion and contraction joint divides the elastic unit into elastic pieces. A thickness of the elastic pieces on the open side of the elastic unit is greater than that on the side close to the fixing unit. Grooves, which are arranged circumferentially, are provided outside the elastic unit, and correspond to the expansion and contraction insertion hole, and the plug-in terminal further comprises an elastic kit sleeved on the grooves, and side walls on both sides of the grooves on the elastic pieces protrude above the surface of the elastic pieces. Each of the elastic pieces extends in a corrugated shape in a lengthwise direction.

An embodiment according to a second aspect of the present disclosure provides a mating plug-in connection structure, including: a plug-in terminal mentioned above and a mating terminal, the mating terminal is plugged into an expansion and contraction insertion hole, and an outer sidewall of the mating terminal is in close contact with an inner sidewall of an elastic unit.

An embodiment according to a third aspect of the present disclosure provides a plug-in terminal assembly, including the plug-in terminal mentioned above and a temperature sensor provided on the plug-in terminal.

The present disclosure brings about advantageous effects as follows:
1. by providing an elastic unit including an expansion and contraction insertion hole, the elastic unit may adapt to machining errors of a mating terminal, so that the plug-in terminal of the present disclosure has a greater bonding force with the mating terminal, and guarantees a larger contact area and realizes better electrical properties and mechanical properties;
2. by setting a plug-in end made of copper and a connecting end made of aluminum, a plug-in end made of copper/copper alloy may be directly plugged in with the mating terminal made of copper, the mating terminal made of copper may be connected to a copper wire again and the connecting end made of aluminum/aluminum alloy may be directly connected to an aluminum wire, thereby realizing reliable connection of the copper and aluminum wires;
3. a plug-in terminal of a mating plug-in connection structure includes: a plug-in end made of copper or copper alloy and a connecting end made of aluminum or aluminum alloy; and a mating terminal of the plug-in connection structure includes: a contact segment made of copper or copper alloy and a connection segment made of aluminum or aluminum alloy, in use, the connecting end made of aluminum/aluminum alloy may be directly connected to the aluminum wire, the connection segment made of aluminum/aluminum alloy may also be directly connected to the aluminum wire, the plug-in end made of copper/copper alloy may be directly connected to the contact segment made of copper/copper alloy, the plug-in connection structure made of copper may ensure conductivity and stability of electrical connection, and may better securely plug and unplug the two wires made of aluminum;
4. by designing the plug-in end in a structure of elastic pieces with an expansion and contraction joint, when the plug-in end is plugged in with the mating terminal, the elastic pieces not only adapts to machining errors of the mating terminal, but also makes the plug-in terminal have a greater bonding force with the mating terminal due to elasticity of the elastic pieces, and guarantees a larger contact area and realizes better electrical properties and mechanical properties, which not only achieves an effective contact connection, but also effectively reduces the potential risks of personnel electric shock injuries and equipment damage caused by poor plug-in structure;
5. the plug-in terminal of the present disclosure, by providing a positioning pin inside the expansion and contraction insertion hole, the positioning pin can be mutually plugged in with a positioning hole of the mating terminal, such that the long mating terminal can be positioned inside the plug-in terminal and a front end of the mating terminal may be prevented from shaking inside the expansion and contraction insertion hole of the plug-in terminal due to vibration, which prevents changes in contact resistance due to shaking and maintains current stability in the plug-in structure, also avoids a short circuit due to excessive shaking of the mating terminal leading to a mutual contact between the cables connected at a rear end, and reduces the probability of short circuit accidents and personnel electric shock injuries;
6. the plug-in terminal of the present disclosure, a thickness of the elastic pieces on the open side of the elastic unit is greater than that on the side close to the fixing unit, the thickness of the front end of the elastic pieces increases and the angle inside the front end of the elastic pieces decreases, so that after the mating terminal is plugged, an inner plane of the front end of the expanded elastic pieces forms a surface contact with the surface of the mating terminal, which increases the contact area therebetween and ensures the electrical properties of the plug-in terminal;
7. the plug-in terminal of the present disclosure, a cross-sectional area of an inner hole on the side of the fixing unit is larger than that on the open side, a tapered-hole structure is formed inside the plug-in terminal, which may obtain a greater gripping force after the elastic unit is plugged in with the mating terminal, and may also form a larger contact area with the surface of the mating terminal when the elastic unit expands;
8. the plug-in terminal of the present disclosure, the cross-sectional shape of the inner hole of the expansion and contraction insertion hole is designed in various shapes, which facilitates designers to choose plug-in terminals in different shapes based on an actual environment in which the plug-in terminals are arranged, so as to reduce the volume of the plug-in structure, optimize the contact area, and enhance the electrical properties of the plug-in terminals;
9. the plug-in terminal of the present disclosure, after the expansion and contraction insertion hole is plugged in with the mating terminal, the inner surface of the expansion and contraction insertion hole in the position of a minimum inner diameter is contacted to the outer surface of the mating terminal. When there is mud or dirt or foreign matter on the surface of the mating terminal, in a case of plugging in, the inner surface of the plug-in terminal scratches against the surface of the mating terminal, which may effectively remove mud, dirt and foreign matter from the surface of the mating terminal and ensure that the elastic unit be electrically connected to the surface of the mating terminal, and avoid poor contact due to impurities on the surface of the mating terminal;
10. the plug-in terminal of the present disclosure, the expansion and contraction insertion hole is internally provided with a chamfer or rounding on the open side, which facilitates the plugging of the mating terminal;
11. the plug-in terminal of the present disclosure, an elastic kit can be provided, in a case where the elasticity of the plug-in terminal itself is insufficient due to design reasons, the elastic kit may be used to supplement the gripping force of the plug-in terminal on the mating terminal;
12. the plug-in terminal of the present disclosure may be designed in a split structure, which is more convenient for machining and assembly;
13. the plug-in terminal of the present disclosure is made of tellurium-copper alloys, such that the terminal has good conductivity and free machining performance, which guarantees electrical properties and also improves machinability. Also, the elasticity of tellurium-copper alloys is excellent;
14. the plug-in terminal of the present disclosure is configured with a plating layer, which may better enhance anti-corrosion performance, optionally, a composite plating layer, which may better improve the firmness of the plating layer, after a plurality of plugging and unplugging, it can still ensure that the plating layer does not peel off and has corrosion resistance;
15. the plug-in terminal of the present disclosure, providing the elastic pieces in a corrugated structure not only increases the contact area between the elastic pieces and the mating terminal, enhances the electrical properties of the plug-in terminal, but also plays an axial positioning effect on the mating terminal, prevents the mating terminal from being unplugged from the expansion and contraction insertion hole, and improves the safety and reliability; and
16. the temperature sensor may be arranged inside the terminal to obtain the most accurate temperature value of the plug-in terminal, in order to help the staff know the temperature condition of the terminal in operation.

### BRIEF DESCRIPTION OF THE DRAWINGS

The drawings illustrated herein are intended to provide a further understanding of the present disclosure, form a part of the present disclosure, and are not intended to limit the present disclosure.
FIG. 1 is a structural diagram illustrating a plug-in terminal mounted in a coupling device according to the present disclosure;
FIG. 2 is a structural diagram illustrating a plug-in terminal plugged in with a mating terminal according to the present disclosure;
FIG. 3 is a structural diagram illustrating a plug-in terminal according to the present disclosure;
FIG. 4 is another structural diagram illustrating a plug-in terminal according to the present disclosure;
FIG. 5 is a structural diagram illustrating a plug-in end of a plug-in terminal according to the present disclosure;
FIG. 6 is a structural diagram illustrating a plug-in terminal with an elastic kit according to the present disclosure;
FIG. 7 is a structural diagram illustrating a connecting end of a plug-in terminal according to the present disclosure;
FIG. 8 is a structural diagram illustrating another connecting end of a plug-in terminal according to the present disclosure;
FIG. 9 is a structural diagram illustrating another plug-in terminal plugged in with another mating terminal according to the present disclosure;
FIG. 10 is a structural diagram illustrating an embodiment of a plug-in end with a through-hole according to the present disclosure; and
FIG. 11 is a structural diagram illustrating another plug-in terminal plugged in with another mating terminal according to the present disclosure.

### DETAILED DESCRIPTION

In order to more clearly describe the objective, technical solutions and advantages of the embodiments of the present disclosure, embodiments of the present disclosure will now be described with reference to the drawings. The schematic embodiments of the present disclosure and the description thereof are used herein to explain the present disclosure, but are not intended to be a limitation of the present disclosure. The terms "first", "second" are only used for the purpose of description and cannot be construed as indicating or implying relative importance or implicitly specifying a number of indicated technical features. Therefore, features restricted with "first", "second" may expressly or implicitly include one or more of these features. In the description of the present disclosure, unless otherwise indicated, "a plurality of" means two or more. In the description of the present disclosure, unless otherwise indicated, the term "connection" should be broadly understood to be a fixed connection, or a detachable connection, or a direct connection, or an indirect connection through an intermediate medium, for example. The specific meaning of the terms in this disclosure may be understood by those skilled in the art based on specific circumstances.

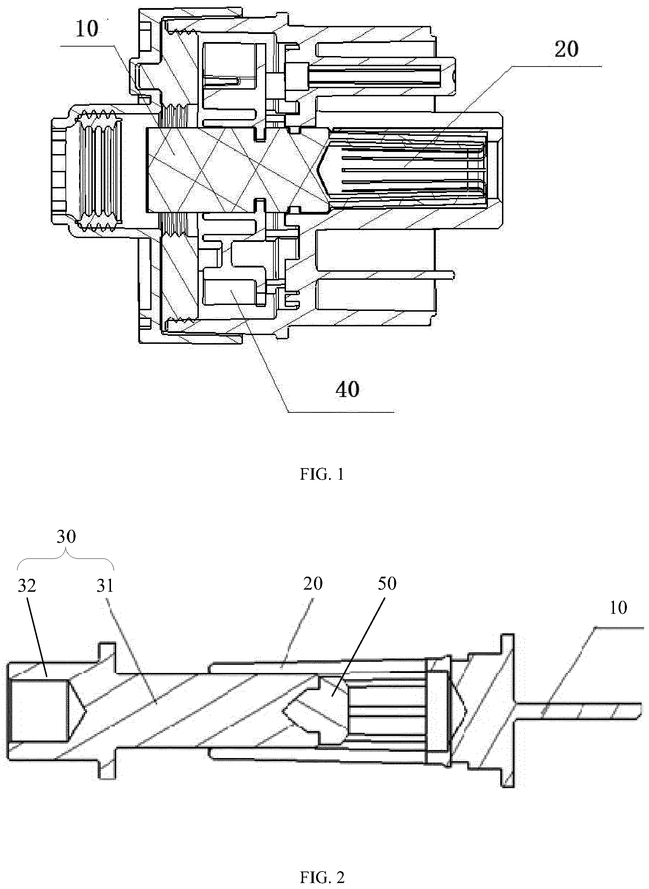

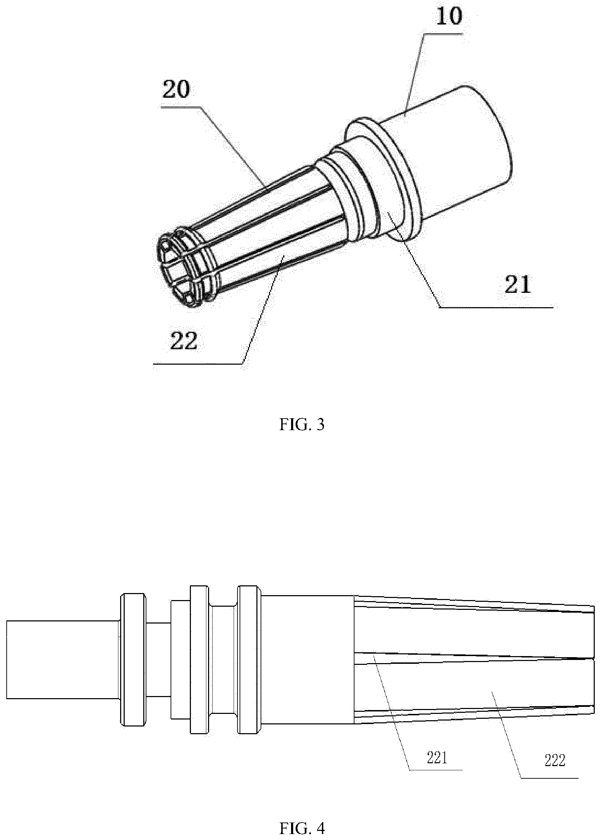

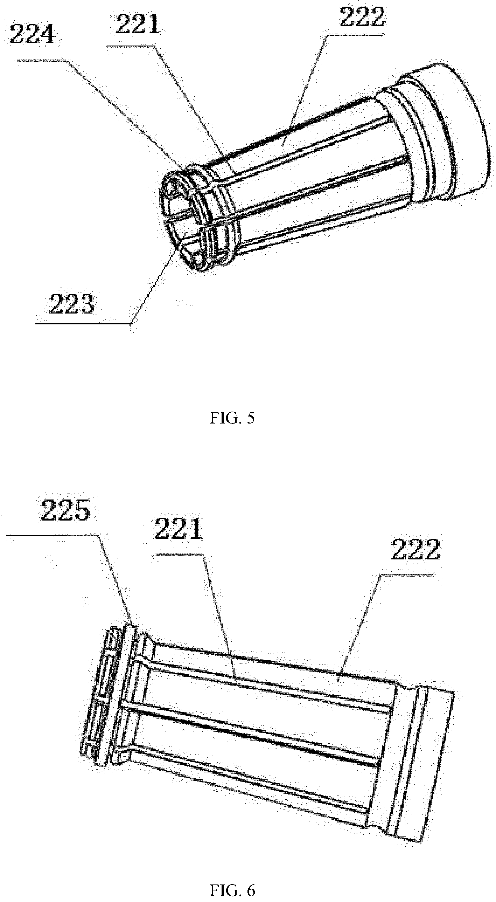

A first aspect embodiment according to the present disclosure provides a plug-in terminal, as illustrated in FIGS. 1, 3, the plug-in terminal includes: a connecting end 10 and a plug-in end 20; the plug-in end 20 includes: a fixing unit 21 and an elastic unit 22, and the fixing unit 21 is provided on a coupling device 40; the connecting end 10 includes two ends, one end of the connecting end 10 is electrically connected to a cable, and the other end of the connecting end 10 is connected to the fixing unit 21; as illustrated in FIGS. 2 and 5, the elastic unit 22 is provided with an expansion and contraction insertion hole 223 for plugging in and electrical connection with a mating terminal 30.

By providing an elastic unit with an expansion and contraction insertion hole, the elastic unit adapts to machining errors of a mating terminal, so that the plug-in terminal of the present disclosure has a greater bonding force with the mating terminal, and guarantees a larger contact area and realizes better electrical properties and mechanical properties, and solves the existing problem that the plug-in terminal cannot meet the mechanical requirements and temperature rise requirements.

Cables of an electric vehicle need to be configured with a large-diameter wire for current conduction due to high voltage and high current, however, the material cost of copper used as a wire is increasingly high with the increasing price of copper. In this regard, people start to look for an alternative to copper metal to reduce costs. The content of metallic aluminum in the crust is approximately 7.73%. After the refining technology is optimized, the price is low, and aluminum is lighter in weight than copper, and has conductivity second only to copper. Aluminum can partially replace copper in the field of electrical connections. Therefore, replacing copper with aluminum becomes a development trend in the field of automotive electrical connections.

However, since the electrode electric-potential-difference between copper and aluminum is large, after copper wires are directly connected to aluminum wires, electrochemical corrosion occurs between the copper wires and the aluminum wires, aluminum is susceptible to corrosion, which leads to an increase in the resistance of the connection area and thus results in serious consequences in electrical connections, such as functional failure, fire, or the like.

In order to solve the problem of difficulty in reliably connecting copper and aluminum wires in the prior art, in some embodiments, the connecting end 10 is made of aluminum or aluminum alloy, and the plug-in end 20 is made of copper or copper alloy.

In this embodiment, by setting a plug-in end made of copper/copper alloy and a connecting end made of aluminum/aluminum alloy, a plug-in end made of copper/copper alloy may be directly plugged in with a mating terminal made of copper, the mating terminal made of copper may be connected to a copper wire again and the connecting end made of aluminum/aluminum alloy may be directly connected to an aluminum wire, thereby realizing reliable connection of the copper and aluminum wires and solving the problem of difficulty in reliable connection of the copper and aluminum wires.

Further, the connecting end 10 and the fixing unit 21 are connected together by one or more of a friction welding, an ultrasonic welding, an arc welding, a laser welding and a resistance welding.

The friction welding refers to a method of using heat generated by friction on a contact surface of a workpiece as a heat source to produce plastic deformation of the workpiece under pressure for welding.

The ultrasonic welding uses high-frequency vibration waves to be transmitted to surfaces of two to-be-welded objects, and forms fusion between molecular layers by rubbing the two object surfaces against each other under pressure.

The arc welding uses electric arc as a heat source, converts electrical energy into thermal and mechanical energy required for welding by a physical phenomenon of air discharge, thereby achieving the purpose of connecting a metal. The main methods involve: shielded metal arc welding, submerged-arc welding, gas shielded arc welding, or the like.

The laser welding refers to an efficient and precise welding that utilizes a high energy density laser beam as a heat source.

The resistance welding refers to a welding that generates heat by a contact resistance by passing a large current through a contact between an electrode and a workpiece for welding.

The plug-in end made of copper/copper alloy and the connecting end made of aluminum/aluminum alloy may be effectively connected using the above machining methods or combinations to ensure that the plug-in terminal has good mechanical properties and electrical properties.

In some embodiments, the elastic unit 22 includes a copper segment and an aluminum segment, one end of the aluminum segment is fixedly connected to the copper segment and the other end of the aluminum segment is connected to the fixing unit.

Further, a length of the copper segment accounts for 0.5%-99.9% of an overall length of the elastic unit.

Aluminum is light in mass, as long as it can ensure that a contact portion with the mating terminal is made of copper, all of the rest can be made of aluminum, which contributes to the overall lightweight design.

The inventors select 10 plug-in terminals in the same shape and the same width of expansion and contraction joints for testing. Each terminal has a different proportion of copper segment, and a length of the copper segment accounts for 0.4%, 0.5%, 5%, 15%, 40%, 60%, 80%, 90%, 95%, 99.9% of the overall length of the elastic unit, respectively. The conductivity results of tests are shown in Table 1. In general, conductivity greater than 99% is an ideal value.

**Table 1 relationship between the proportion of length of the copper segment to the overall length of the elastic unit and the conductivity**

| | | | | | | | | | | |
|---|---|---|---|---|---|---|---|---|---|---|
| proportion | 0.4% | 0.5% | 5% | 15% | 40% | 60% | 80% | 90% | 95% | 99.9% |
| conductivity | 98.5% | 99% | 99.1% | 99.5% | 99.7% | 99.7% | 99.8% | 99.8% | 99.9% | 99.9% |

As can be seen from Table 1, after the length of the copper segment accounts for 0.5% or less of the overall length of the elastic unit, the conductivity decreases significantly, after the length of the copper segment accounts for 0.5% of the overall length of the elastic unit, the conductivity can reach the ideal value, thus the normal current transmission between the terminals can be guaranteed. In addition, in order to ensure that the contact portion with the matching terminal 30 is made of copper, the proportion of the length of the copper segment to the overall length of the elastic unit should be less than or equal to 99.9%. Therefore, the inventors set the length of the copper segment to be 0.5% to 99.9% of the overall length of the elastic unit.

In some embodiments, the coupling device 40 may be a head of the charging gun, and the plug-in terminal may be detachably disposed on the head of the charging gun through the fixing unit 21, one end of the connecting end 10 may be electrically connected to the cable, and the other end of the connecting end 10 may be connected to the fixing unit 21. The expansion and contraction insertion hole 223 is formed inside the elastic unit 22 of the plug-in end 20, can accommodate the mating terminal 30 of the charging pedestal and establish an electrical connection with the mating terminal 30, as illustrated in FIGS. 1 and 2.

The elastic unit 22 includes an expansion and contraction joint 221 of the plug-in terminal extending in a longitudinal direction, and the expansion and contraction joint 221 divides the elastic unit 22 into elastic pieces 222, as illustrated in FIG 5.

As the mating terminal 30 is plugged along the elastic unit 22, the elastic pieces 222 expand axially as the plugging depth increases, and as a result of stress, the inner surface of the elastic pieces 222 is contacted to the surface of the mating terminal 30. The elastic pieces 222 not only adapts to machining errors on the diameter of the mating terminal 30, but also makes the plug-in terminal have a greater bonding force with the mating terminal 30 due to elasticity of the elastic pieces 222, and guarantees a larger contact area and realizes better electrical properties and mechanical properties, which can not only achieve an effective contact connection, but also effectively reduce the potential risks of personnel electric shock injuries and equipment damage caused by poor plug-in structure.

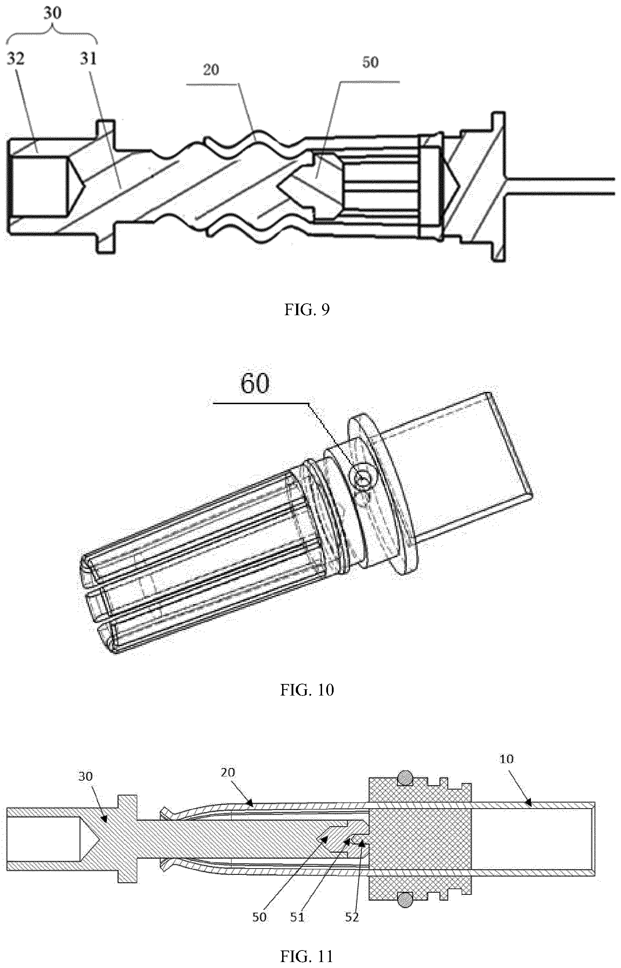

Further, as illustrated in FIG. 9, each of the elastic pieces 222 extends in a corrugated shape in a lengthwise direction, i.e., each of the elastic pieces 222 is of a corrugated structure, accordingly, an outer wall surface of the mating terminal 30 extends in a corrugated shape in an axial direction to attach to the elastic pieces 222. Providing the elastic pieces 222 in a corrugated structure not only increases the contact area between the elastic pieces 222 and the mating terminal 30, enhances the electrical properties of the plug-in terminal, but also plays an axial positioning effect on the mating terminal 30, prevents the mating terminal 30 from being unplugged from the expansion and contraction insertion hole 223, and improves the safety and reliability.

In some embodiments, as illustrated in FIG. 4, a width of the expansion and contraction joint 221 on a side close to the fixing unit 21 is greater than or equal to that on an open side of the elastic unit 22. The open side of the elastic unit 22 is a position where the elastic pieces 222 come into contact with the mating terminal 30. In order to obtain a larger contact area, a gap of the expansion and contraction joint 221 is as small as possible on the open side of the elastic unit 22. Also, since the expansion and contraction insertion hole 223 may be inserted into water and sediment, in order to improve the performance and prolong the service life of the plug-in terminal, positions of draining sediment and water should be designed on the plug-in terminal, thus, the greater the width of the expansion and contraction joint 221 on the side close to the fixing unit 21, the better the performance of sediment and water drainage.

Further, a minimum width of the expansion and contraction joint 221 ranges from 0.01mm to 12mm. The inventors conduct tests on the minimum width of the expansion and contraction joint 221 of the plug-in terminals with different diameters, a large number of test results were obtained to prove that if the minimum width of the expansion and contraction joint 221 is less than 0.01mm, it is difficult for water and sediment inside the plug-in terminal to be drained from the inside of the terminal, which may cause blockage inside the terminal, scratches on the surface of the plug-in terminal, and in severe cases, the contact resistance increases, and the temperature also rises sharply, resulting in accidents such as burning the circuit. If the minimum width of the expansion and contraction joint 221 is greater than 12mm, the width of the elastic pieces 222 is small, and the contact area with the mating terminal 30 is also small, which does not satisfy the electrical conduction area of the plug-in terminal and cannot better achieve the conductivity of the circuit.

Further, a minimum width of the expansion and contraction joint 221 ranges from 0.1mm to 10mm. Also, the inventors select the minimum width range of the expansion and contraction joint 221 from the test results, which can balance the conductivity of the plug-in terminal, timely drain the water and sediment inside the plug-in terminal, and prolong the service life of the plug-in terminal.

The number of the elastic pieces 222 is 4, 6, 8, 10, 12, 14, or 16. Since the electrical connection between the plug-in terminal and the mating terminal 30 is guaranteed by the elasticity of the elastic pieces 222, it is desirable to provide the elastic pieces 222 symmetrically to guarantee symmetrical stress after contact, thus the number of the elastic pieces 222 is generally an even number.

The inventors select 100 plug-in terminals with the same material, the same shape, and the same width of the expansion and contraction joints, set the number of the elastic pieces 222 on the plug-in terminal to be 2, 4, 6, 8, 10, 12, 14, 16, 18, and 20, respectively, with 10 plug-in terminals per group, and test the conductivity of the plug-in terminal samples after plugged in and the elasticity of the elastic unit 22 on the open side, respectively. The testing results are shown in Table 2.

The method for testing conductivity includes: passing the same current through the plug-in terminal and mating terminal 30 after plugged in, and obtaining ratios by comparing the detected current value with the current value detected by the plug-in terminal and mating terminal 30 when in full contact. In this embodiment, a ratio less than 99% is considered unqualified.

The method for testing elasticity uses a precision dynamometer to detect elasticity of one elastic piece 222 when moving 1mm from the open position. In this embodiment, the elasticity less than 3N and greater than 10N is considered unqualified based on the terminal in the corresponding shape. Since the elasticity is reduced, the gripping force of the plug-in terminal on the mating terminal 30 is reduced, as a result, the contact area is reduced and the contact resistance is increased. The plugging force on the mating terminal 30 is increased with the increased elasticity, and the terminal cannot be easily plugged and unplugged.

**Table 2 effect of different numbers of elastic pieces on conductivity and elasticity**

| numbers of elastic pieces | | | | | | | | | |
|---|---|---|---|---|---|---|---|---|---|
| 2 | 4 | 6 | 8 | 10 | 12 | 14 | 16 | 18 | 20 |

| average value of conductivity (%) | | | | | | | | | |
|---|---|---|---|---|---|---|---|---|---|
| 99.92 | 99.76 | 99.67 | 99.57 | 99.45 | 99.37 | 99.26 | 99.13 | 98.81 | 98.46 |

| average value of elasticity (N) | | | | | | | | | |
|---|---|---|---|---|---|---|---|---|---|
| 13.25 | 11.87 | 10.38 | 9.34 | 7.22 | 6.08 | 4.96 | 3.45 | 2.92 | 2.08 |

As can be seen from the Table 2, in a case where the number of the elastic pieces 222 is less than 4, in light of the large width, the elastic pieces 222 have good conductivity but poor elasticity, such that it is difficult to plug and unplug the mating terminal 30. In a case where the number of the elastic pieces 222 is increased to 16 or more, the increase in the expansion and contraction joint 221 results in a decrease in contact area and an unqualified conductivity. And the elasticity cannot be guaranteed due to the small width of the elastic pieces 222. Therefore, the inventors determine the number of the elastic pieces 222 to be 4, 6, 8, 10, 12, 14 or 16.

As to the expansion and contraction insertion hole 223 of the elastic unit 22, a cross-sectional area of an inner hole on the side close to the fixing unit 21 is larger than that on the open side of the elastic unit 22. If the inner diameter of the expansion and contraction insertion hole 223 is exactly the same as the outer diameter of the mating terminal 30, as a result of tolerance fit, the mating terminal 30 may not be plugged into the expansion and contraction insertion hole 223, or the mating terminal 30 covers most of the area not in contact with the expansion and contraction insertion hole 223, thereby resulting in cases in which electrical conductivity may not be achieved, or a small contact area leads to an increase in contact resistance, or excessive temperature rise occurs, or the like. Therefore, the inventors set an interior of the expansion and contraction insertion hole 223 in a taper shape with a small opening and a large rear end, such that the mating terminal 30 can be plugged into the expansion and contraction insertion hole 223, and meanwhile, the elastic pieces 222 can have a greater deformation space, such that the elastic unit 22 obtains a greater gripping force after being plugged in with the mating terminal 30.

As illustrated in FIG. 4, the elastic pieces 222 form a cone angle with an axis of the plug-in end 20, the elastic pieces 222 have a cone angle ranging from 0.1 ° to 30 °.

If the cone angle is less than 0.1 °, the width of the expansion and contraction joint 221 is essentially the same, which results in cases such as a large width of the expansion and contraction joint 221 at a front end of the elastic unit 22, a small contact area when in contact with the mating terminal 30, an increase in contact resistance or excessive temperature rise in the circuit, alternatively, the expansion and contraction joint 221 on the side close to the fixing unit 21 has a too small width, such that water and sediment inside the plug-in terminal may not be drained in a timely manner, and the service life of the plug-in terminal is reduced.

If the cone angle is greater than 30 °, the widths of the expansion and contraction joint 221 differ significantly. In a case where the width of the expansion and contraction joint 221 at the front end of the elastic unit 22 is small, the width of the expansion and contraction joint 221 is too large on the side close to the fixing unit 21, such that the width of the elastic pieces 222 is small, and the elasticity of the elastic pieces 222 is insufficient, thus the gripping force between the elastic pieces 222 and the mating terminal 30 cannot be guaranteed.

A thickness of the elastic pieces 222 on the open side of the elastic unit 22 is greater than that on the side close to the fixing unit 21.

If the thicknesses of the elastic pieces 222 are consistent, after the expansion and contraction insertion hole 223 of the elastic pieces 22 is plugged in with the mating terminal 30, the inner surface of the expansion and contraction insertion hole 223 in the minimum inner diameter position is contacted to the outer surface of the mating terminal 30 to form a line contact with a small contact area. Therefore, the inventors increase the thickness of the front end of the elastic pieces 222 and decreased the angle inside the front end of the elastic pieces 222, such that after the mating terminal 30 is plugged, the plane inside the front end of the expanded elastic pieces 222 forms a surface contact with the surface of the mating terminal 30, which increases the contact area thereof and ensures the electrical properties of the plug-in terminal.

After the expansion and contraction insertion hole 223 of the elastic unit 22 is plugged in with the mating terminal 30, and the inner surface of the expansion and contraction insertion hole 223 in the minimum inner diameter position is contacted to the outer surface of the mating terminal 30. The mating terminal 30 is generally a male terminal. If there is mud or dirt or foreign matter on the surface of the mating terminal 30 when used in a harsh environment or used externally for a long period of time, if left untreated, this not only affects the contacting effect of the plug-in terminal and the mating terminal 30 and reduces the electrical properties, but also causes damage to the surfaces of both terminals, destroys the plating layer, and significantly reduces the service life of the plug-in terminal, in severe cases, the increased contact resistance results in overheating and burning of the plug-in connector, as a consequence, safety accidents occur. The inner surface of the expansion and contraction insertion hole 223 in the minimum inner diameter position is contacted to the outer surface of the mating terminal 30, in a case of plugging in, the inner surface of the plug-in terminal scratches against the surface of the mating terminal 30, which can effectively remove mud, dirt and foreign matter from the surface of the mating terminal 30, such that the two surfaces come into closer contact and achieve better electrical properties.

In some embodiments, as illustrated in FIG. 11, a positioning pin 52 is provided in the expansion and contraction insertion hole 223, and the positioning pin 52 is configured for mutual plugging in with a positioning hole 51 at a front end of the mating terminal 30. such that the long mating terminal is positioned inside the plug-in terminal and the front end of the mating terminal 30 is prevented from shaking inside the expansion and contraction insertion hole of the plug-in terminal due to vibration, which prevents changes in contact resistance due to shaking and maintains current stability in the plug-in structure, and also avoids a short circuit due to excessive shaking of the mating terminal leading to a mutual contact between the cables connected at a rear end, and reduces the probability of short circuit accidents and personnel electric shock injuries.

Further, the positioning pin 52 is arranged along an axial direction of the expansion and contraction insertion hole 223, and the positioning pin 52 is fixed on an end wall of the expansion and contraction insertion hole 223, the positioning pin 52 has a bottom portion connected to the end wall and a top portion, and a cross-sectional area of the top portion is smaller than or equal to that of the bottom portion. Accordingly, the aperture of the front end of the positioning hole 51 of the mating terminal 30 is larger than the rear end aperture to match the shape of the positioning pin 52 for plugging in.

Specifically, the elastic unit 22 includes: an insertion segment, an extension segment and a solid segment connected in sequence. The expansion and contraction insertion hole 223 is formed inside the insertion segment and the extension segment, the solid segment is connected to the fixing unit 21, and the positioning pin 52 is provided on a side of the solid segment close to the extension segment so as to plug in with the positioning hole 51 at the front end of the mating terminal 30.

In some embodiments, a cross-sectional shape of the inner hole of the expansion and contraction insertion hole 223 of the elastic unit 22 is circular, elliptical, polygonal, flat, E-shaped, F-shaped, H-shaped, K-shaped, L-shaped, T-shaped, U-shaped, V-shaped, W-shaped, X-shaped, Y-shaped, Z-shaped, semi arc-shaped, arc-shaped or wavy. The cross-sectional shape of the inner hole of the expansion and contraction insertion hole 223 is designed in various shapes, which facilitates designers to choose plug-in terminals in different shapes based on an actual environment in which the plug-in terminals are arranged, so as to reduce the volume of the plug-in structure, optimize the contact area, and enhance the electrical properties of the plug-in terminal;

In some embodiments, the expansion and contraction insertion hole 223 of the elastic unit 22 is internally provided with a chamfer or rounding on the open side of the elastic unit 22. Since the expansion and contraction insertion hole 223 is generally a tapered hole, the opening diameter of the expansion and contraction insertion hole 223 is smaller than the diameter of the mating terminal 30, so a chamfer or rounding is provided inside the open side of the expansion and contraction insertion hole 223 to guide the plugging of the mating terminal 30, guide the smooth plugging of the mating terminal 30, and expand the elastic pieces 222 to be inserted into the expansion and contraction insertion hole 223.

As illustrated in FIGS. 5 and 6, grooves 224, which are arranged circumferentially, are provided outside the elastic unit 22, and correspond to the expansion and contraction insertion hole 223, and the plug-in terminal further includes an elastic kit 225 sleeved on the grooves 224.

It should be noted that when the wall thickness of the plug-in terminal is designed to be too small owing to the use environment, or the number of the openings is large, or there is a large difference in diameter from the mating terminal 30, the gripping force of the elastic pieces 222 on the mating terminal 30 is insufficient, which results in a small contact area between the plug-in terminal and the mating terminal 30, and poor electrical properties. In a case where the elasticity of the plug-in terminal itself is insufficient due to design reasons, the elastic kit 225 may be used to supplement the gripping force of the plug-in terminal on the mating terminal 30. The elastic kit 225 may be an elastic rubber body or an opening elastic rigid body, which limits the continued outward expansion of the elastic pieces 222 of the plug-in terminal, and increases the gripping force of the elastic pieces 222 on the mating terminal 30.

As illustrated in FIG. 6, the outer wall of the plug-in end 20 has the grooves 224 arranged circumferentially, the grooves 224 are annular grooves, and the at least one elastic kit 225 is sleeved on the grooves 224 for tightening the plug-in end 20, so as to realize the better contractual performance between the elastic unit 22 and the mating terminal 30.

In some embodiments, the plug-in end 20 and the connecting end 10 are integrally molded. The integrated molding is of high design strength. Importantly, centralized machining can be performed before assembly, thereby greatly improving the assembly efficiency.

The connecting end 10 and the plug-in end 20 are connected by crimping, snapping, threaded connection, welding, riveting or embedding.

The crimping is a production process in which the connecting end 10 and the plug-in end 20 are stamped into one unit using a crimping machine, after assembled. An advantage of crimping is of mass production. Stable quality products can be rapidly and massively produced by using chain terminals and automatic crimping machines.

The snapping refers to snapping the connecting end 10 and the plug-in end 20 together using a component such as a clamp. An advantage of snapping is that a connection can be realized with the help of a tool, without complex equipment, and is suitable for repair and maintenance scenarios.

The threaded connection refers to that the connecting end 10 and the plug-in end 20 have a threaded structure, respectively, and can be threaded connection together or connected together using separate bolts and nuts. An advantage of threaded connection is detachability, is assembled and disassembled repeatedly, and is suitable for scenarios in which frequent disassembly is required.

The welding refers to fusing the connecting end 10 and the plug-in end 20 into one unit by a metal welding joint by friction welding, resistance welding, ultrasonic welding, arc welding, pressure welding, laser welding, explosion welding, thereby resulting in a firm connection and a low contact resistance.

The riveting refers to riveting the connecting end 10 and the plug-in end 20 together using rivets. Advantages of riveting include: firm connection, simple machining and easy operation.

The embedding refers to assembling the connecting end 10 and the plug-in end 20 together in an embedded manner, in an embedded structure at a junction between the connecting end 10 and the plug-in end 20. An advantage of embedding is that the connecting end 10 and the plug-in end 20 can be assembled together without a tool, and is suitable for repair and maintenance scenarios.

In some embodiments, the integrated plug-in terminal may not be assembled into the coupling device 40 due to the special design of the coupling device 40, and the plug-in terminal needs to be produced in a split structure to be assembled and connected on the coupling device 40, which is suitable for crimping, snapping, threaded connection, riveting or embedded connection at this time.

In some embodiments, the plug-in terminal may be divided into a plurality of parts for machining due to the complex structure of the plug-in terminal, the high cost of the integrated machining process and the long machining time, for example, the connecting end 10 and the plug-in end 20 are assembled together after a stamping process to process the plug-in end 20 and a machining process to process the connecting end 10, thus the process is simplified, the processing costs is reduced, and the processing man-hours is reduced.

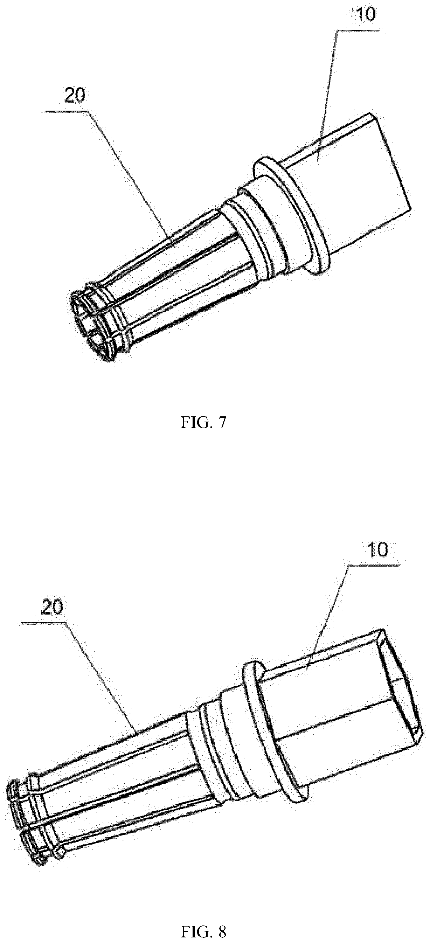

The connecting end 10 is in a flat structure (as illustrated in FIGS. 2 and 7), a U-shaped structure, a superior-arc-shaped structure, a cylindrical structure (as illustrated in FIG. 3), a cylindrical structure (as illustrated in FIG. 1), a bowl-shaped structure, or a polygonal structure (as illustrated in FIG. 8).

In some embodiments, the connecting end 10 is required to be electrically connected to the cable, generally in a crimping or welding process, thus the connecting end 10 is designed in a plurality of structures, so that different structures of the connecting end 10 may be selected based on requirements of the electrical connection, and the environment in which the coupling device 40 is assembled, and a stable electrical connection can be established with the cable. In general, the U-shaped, superior-arc, cylindrical or polygonal structures is suitable for crimping and welding, and flat or bowl-shaped structures is suitable for welding.

In some embodiments, a material of the connecting end 10 and/or the plug-in end 20 contains tellurium.

Further, the tellurium in the material of the connecting end 10 and/or the plug-in end 20 has a content of 0.1%-5%.

That is to say, the plug-in terminal 20 is made of tellurium-copper alloy, such that the terminal has good conductivity and free machining performance, which guarantees electrical properties and improves machinability. Also, the elasticity of tellurium-copper alloy is excellent. Optional, the content of tellurium in the tellurium-copper alloy is 0.2%-1.2%.

The inventors select 10 plug-in terminals in the same shape with the same width of expansion and contraction joint for testing. Each terminal is made of tellurium-copper alloy, in which the proportion of tellurium content is 0.05%, 0.1%, 0.2%, 1%, 1.2%, 1.8%, 3%, 5%, 6% and 7%, respectively. The results of tests are shown in Table 3. In this embodiment, conductivity of the tellurium-copper alloy greater than 99% is an ideal value.

**Table 3 effect of tellurium-copper alloy with different tellurium contents on conductivity**

| | | | | | | | | | | |
|---|---|---|---|---|---|---|---|---|---|---|
| tellurium content | 0.05% | 0.1% | 0.2% | 1% | 1.2% | 1.8% | 3% | 5% | 6% | 7% |
| conductivity | 98.6% | 99.1% | 99.3% | 99.6% | 99.8% | 99.5% | 99.3% | 99.1% | 98.9% | 98.7% |

As can be seen from the Table 3, in a case where the proportion of tellurium content is less than 0.1% or greater than 5%, the conductivity significantly decreases and the requirements of ideal value cannot be met. In a case where the proportion of tellurium content is greater than or equal to 0.2% and less than or equal to 1.2, the best conductivity is achieved. Therefore, the inventors select the tellurium-copper alloy with the tellurium content of 0.1%-5%. The tellurium-copper alloy with a content of 0.2% to 1.2% is used in a most ideal case.

The connecting end 10 and/or the plug-in end 20 has a plating layer, to improve corrosion resistance, conductivity, and increase the number of plugging in, better prolong the service life of the connecting end 10 and the plug-in end 20.

The plating layer may be generated by methods such as electroplating, chemical plating, magnetron sputtering, vacuum plating, or the like. The thickness of the plating layer on the connecting end 10 is the same as that on the plug-in end 20. The plating layer has a consistent thickness and can be molded by electroplating in one go during machining, without complex electroplating machining to obtain different thicknesses of the plating layer in different areas, thus the processing costs are saved and the electroplating pollution is reduced.

The electroplating method is a process of plating a thin layer of some metals or alloys on a surface of other metals based on the principle of electrolysis.

The chemical plating method is a deposition process of producing a metal by a controllable oxidation-reduction reaction under catalysis of a metal.

The magnetron sputtering method enables electrons to travel in a spiral near a target surface by using a magnetic field interacting with an electric field, thereby increasing a probability of producing ions from the electrons colliding with argon gas. The resulting ions collide with the target surface under the action of an electric field so as to be sputtered out of the target.

The vacuum plating method deposits various metallic and non-metallic thin-films on a surface of molded parts by distillation or sputtering under vacuum conditions.

The material of the plating layer on the connecting end 10 is inconsistent with that on the plug-in end 20.

The plating layer is made of one or more of gold, silver, nickel, tin, zinc, tin-lead alloys, silver-antimony alloys, palladium, palladium-nickel alloys, graphite silver, graphene silver and silver-gold-zirconium alloys. Copper, as an active metal, oxidizes with oxygen and water in use, so one or more inactive metals are needed as a plating layer to prolong the service life of the plug-in terminal. In addition, for a metal contact point where frequent plugging and unplugging are required, a good wear-resistant metal is also required as a plating layer, and the service life of the contact point may be significantly prolonged. The good conductivity is required for the contact point. The conductivity and stability of the above metals are better than those of copper or copper alloy, thus better electrical properties and a longer service life of the plug-in terminal can be obtained.

Since the plug-in end 20 is in a position where it is frequently plugged into or unplugged from the mating terminal, also in a position where it is electrically conductive to the mating terminal, metal materials with excellent conductivity, stability, and wear resistance are generally selected for the plating layer material here, however, these metals are generally precious metals with high price. The position of connecting end 10 electrical connected with the conductor of the cable, does not require high stability and wear resistance, and can select some metal materials with excellent performance, but inexpensive and usable in bulk, as the plating layer material.

In order to demonstrate the impact of different plating layer materials on the overall performance of the plug-in terminal, the inventors use the plug-in terminal samples with the same specification, material, different plating layer materials and the mating plug-in terminal with the same specification, for a series of tests such as number of plugging and unplugging process and corrosion resistance time. In order to demonstrate the advantages and disadvantages of the selected materials and other common electroplating materials, the inventors also select tin, nickel, and zinc as the plating layer materials for test. The tset results are shown in Table 4 below.

The number of plugging and unplugging process in Table 4 below involves that mating plug-in terminals are fixed on an test table, respectively, plugging and unplugging process of the mating plug-in terminals are simulated using a mechanical device, stopped to observe a damage to a plating layer on a terminal surface every 100 times of plugging and unplugging process, the test is stopped if the plating layer of the terminal surface is scratched and the material of the terminal itself is exposed, and the number of plugging and unplugging process at that time is recorded. The number of plugging and unplugging process less than 8,000 is considered unqualified.

The test for corrosion resistance time in Table 4 below involves that the plug-in terminals are placed in a salt-fog-spraying test chamber, salt-fog is sprayed on each position of the plug-in terminals, and the plug-in terminals are removed every 20 hours and cleaned to observe surface corrosion, i.e., one cycle, until the surface corrosion area of the plug-in terminals is greater than 10% of the total area, the test is stopped and the number of cycles at that time is recorded. In this embodiment, the number of cycles less than 80 is considered unqualified.

**Table 4 effect of different plating layer materials on number of plugging and unplugging process and corrosion resistance of plug-in terminals**

| different plating layer materials | | | | | | | | | | | |
|---|---|---|---|---|---|---|---|---|---|---|---|
| gold | silver | silver-antimony alloys | graphite silver | graphene silver | silver-gold-zirconium alloys | tin | nickel | palladium | palladium-nickel alloys | tin-lead alloys | zinc |
| times of plugging and unplugging process | | | | | | | | | | | |
| 12400 | 11800 | 12200 | 12500 | 12700 | 13100 | 8200 | 8300 | 11000 | 12100 | 9800 | 8500 |

| | | | number of corrosion resistance testing cycles | | | | | | | | |
|---|---|---|---|---|---|---|---|---|---|---|---|
| 134 | 128 | 125 | 130 | 127 | 132 | 86 | 88 | 111 | 118 | 110 | 84 |

As can be seen from the Table, in a case where the selected material of the plating layer is gold, silver, silver-antimony alloys, palladium, palladium-nickel alloys, graphite silver, graphene silver and silver-gold-zirconium alloys, the test results significantly exceed the standard values and the performance is stable. In a case where the selected material of the plating layer is nickel, tin, tin-lead alloys, or zinc, the test results also meet the requirements, and therefore, the inventors select the plating layer material to be one or a combination of gold, silver, nickel, tin, tin-lead alloys, zinc, silver-antimony alloys, palladium, palladium-nickel alloys, graphite silver, graphene silver, and silver-gold-zirconium alloys.

The plating layer includes: an underlying layer and a surface layer.

In some embodiments, a multi-layer plating method is used to generate the plating layer. In fact, after machined, there are a plurality of gaps and holes in the connecting end 10 and/or the plug-in end 20 on a micro-interface of the surface. The connecting end 10 and/or the socket end 20 are subject to wear and corrosion during use mainly caused by these gaps and holes. Therefore, the surface of the connecting end 10 and/or the plug-in end 20 need to be plating a underlying layer of the plating layer to fill the gaps and holes on their surface, such that the surface of the connecting end 10 and/or the plug-in end 20 is flat without holes, the surface layer of the plating layer is then plated to make a more firm bonding and even smoother without gaps or holes on the surface of the plating layer, thereby achieving the better properties such as wear resistance, corrosion resistance and electrical properties of the plug-in terminals, and significantly prolonging the service life of the plug-in terminals.

The underlying layer is made of one or more of gold, silver, nickel, tin, tin-lead alloys and zinc; and the surface layer is made of one or more of gold, silver, nickel, tin, tin-lead alloys, silver-antimony alloys, palladium, palladium-nickel alloys, graphite silver, graphene silver and silver-gold-zirconium alloys.

In another embodiment, the underlying layer has a thickness of 0.01µm-15µm. Optional, the underlying layer has a thickness of 0. 1µm-9µm.

In another embodiment, the surface layer has a thickness of 0.5µm-55µm. Optional, the surface layer has a thickness of 1µm-35µm.

In order to prove the effect of variations in the thickness of the underlying plating layer on the overall performance of the plug-in terminals, the inventors use plug-in terminal samples with the same specification and material, the underlying layer of nickel-plating with different thicknesses, and the surface layer of silver-plating with same thickness, and the mating plug-in terminals with the same specification for a series of tests such as temperature rise and corrosion resistance time. The test results are shown in Table 5 below.

The temperature rise test in Table 5 below includes passing the same current through the plug-in terminal and the mating terminal 30 after plugged in, detecting the temperature at the same position of the plug-in terminal before power-on and after temperature stabilization in a closed environment, and taking an absolute value of its difference. In this embodiment, the temperature rise greater than 50K is considered unqualified.

The test for corrosion resistance time in Table 5 below includes that the plug-in terminals are placed in a salt fog-spraying test chamber, salt fog is sprayed on each position of the plug-in terminals, and the plug-in terminals are removed every 20 hours and cleaned to observe surface corrosion, i.e., one cycle, until the surface corrosion area of the plug-in terminals is greater than 10% of the total area, the test is stopped and the number of cycles at that time is recorded. In this embodiment, the number of cycles less than 80 is considered unqualified.

**Table 5 effect of different thicknesses of the underlying layer of the plating layer on temperature rise and corrosion resistance of plug-in terminals**

| different thicknesses of the underlying layer of nickel-plating (µm) | | | | | | | | | | | | | | | |
|---|---|---|---|---|---|---|---|---|---|---|---|---|---|---|---|
| 0.001 | 0.005 | 0.01 | 0.05 | 0.1 | 0.5 | 1 | 3 | 5 | 6 | 9 | 11 | 13 | 15 | 17 | 19 |

| temperature rise of plug-in terminal (k) | | | | | | | | | | | | | | | |
|---|---|---|---|---|---|---|---|---|---|---|---|---|---|---|---|
| 10.7 | 12.3 | 14.9 | 16.6 | 18.2 | 21.9 | 24.5 | 26.7 | 28.6 | 31.3 | 35.9 | 40.5 | 43.5 | 47.8 | 58.1 | 67.4 |

| number of corrosion resistance testing cycles | | | | | | | | | | | | | | | |
|---|---|---|---|---|---|---|---|---|---|---|---|---|---|---|---|
| 67 | 78 | 82 | 93 | 105 | 109 | 113 | 117 | 120 | 124 | 128 | 129 | 130 | 130 | 129 | 127 |

As can be seen from the Table 5, in a case where the thickness of the underlying layer of nickel-plating is less than 0.01µm, although the temperature rise of the plug-in terminals is qualified, the plating layer is too thin, the number of corrosion resistance cycles of the plug-in terminals is less than 80, thus the performance requirements of the plug-in terminals is not met. The overall performance and service life of the plug-in are greatly impacted, and a sudden decrease in product lifespan or even failure and combustion accidents may occur in severe cases. In a case where the thickness of the underlying layer of nickel-plating is greater than 15µm, the heat generated by the plug-in terminals is not dissipated due to the thick underlying layer of the plating layer, the temperature rise of the plug-in terminals is unqualified, and the thick plating layer is easily peeled off from the terminal surface, thereby resulting in a decrease in the number of corrosion resistance cycles. Thus, the inventors select the thickness of the underlying layer of the plating layer to be 0.01µm-15µm. Optional, the inventors discover that the comprehensive effect of temperature rise and corrosion resistance of the plug-in terminals is better when the thickness of the underlying layer of the plating layer was 0.1µm-9µm. Therefore, in order to further improve the safety, reliability and practicality of the product itself, optionally, the thickness of the underlying layer of the plating layer is 0.1µm-9µm.

In order to prove the effect of variations in the thickness of the surface plating layer on the overall performance of the plug-in terminals, the inventors use plug-in terminal samples with the same specification and material, the underlying layer of nickel-plating with the same thickness, and the underlying layer of silver-plating with different thicknesses, and the mating plug-in terminal with the same specification for a series of tests such as temperature rise and corrosion resistance time. The test results are shown in Table 6 below.

The test method is the same as that described above.

**Table 6 effect of different thicknesses of surface layer of the plating layer on temperature rise and corrosion resistance**

| different thicknesses of surface layer of silver-plating (µm) | | | | | | | | | | | | | | | | |
|---|---|---|---|---|---|---|---|---|---|---|---|---|---|---|---|---|
| 0.1 | 0.5 | 1 | 1.5 | 5 | 10 | 15 | 20 | 25 | 30 | 35 | 40 | 45 | 50 | 55 | 60 | 65 |

| temperature rise of plug-in terminal (k) | | | | | | | | | | | | | | | | |
|---|---|---|---|---|---|---|---|---|---|---|---|---|---|---|---|---|
| 11.4 | 13.8 | 15.2 | 17.5 | 21.8 | 23.9 | 25.3 | 28.6 | 31.8 | 35.4 | 38.9 | 42.7 | 45.3 | 48.4 | 49.5 | 53.8 | 69.6 |

| number of corrosion resistance testing cycles | | | | | | | | | | | | | | | | |
|---|---|---|---|---|---|---|---|---|---|---|---|---|---|---|---|---|
| 75 | 82 | 91 | 93 | 95 | 97 | 98 | 103 | 105 | 109 | 113 | 117 | 119 | 122 | 125 | 124 | 121 |

As can be seen from the Table 6, in a case where the thickness of the surface layer of silver-plating is less than 0.5µm, although the temperature rise of the plug-in terminals is qualified, the plating layer is too thin, the number of corrosion resistance cycles of the plug-in terminals is less than 80, thus the performance requirements of the plug-in terminals is not met. The overall performance and service life of the plug-in are greatly impacted, and a sudden decrease in product lifespan or even failure and combustion accidents may occur in severe cases. In a case where the thickness of the surface layer of silver-plating is greater than 55µm, the heat generated by the plug-in terminals is not dissipated due to the thick surface layer of the plating layer, the temperature rise of the plug-in terminals is unqualified, and the thick plating layer is easily peeled off from the terminal surface, thereby resulting in a decrease in the number of corrosion resistance cycles. Since the metal for surface plating is expensive, the use of a thick plating layer involves no rise in performance and no practical value. Thus, the inventors select the thickness of the surface layer of silver-plating to be 0.1µm-55µm.

Optionally, the inventors discover that the comprehensive effect of temperature rise and corrosion resistance of the plug-in terminals is better when the thickness of the surface layer of the plating layer is 1µm-35µm. Therefore, in order to further improve the safety, reliability and practicality of the product itself, optionally, the thickness of the surface layer of the plating layer is 1µm-35µm.

A structure of the plug-in end 20 with the expansion and contraction joint 221 and elastic pieces 222 is designed according to the present disclosure by changing the structure of the plug-in end, and an outer structure of the elastic pieces 222 is changed, so as to not only achieve an effective contact connection in use, but also effectively reduce the potential risks of personnel electric shock injuries and equipment damage caused by poor plug-in structure.

As illustrated in FIG. 2, a second aspect embodiment according to the present disclosure provides a mating plug-in connection structure, including: a plug-in terminal according to the first aspect embodiment and a mating terminal 30, the mating terminal 30 is plugged into an expansion and contraction insertion hole 223, and an outer sidewall of the mating terminal 30 is in close contact with an inner sidewall of an elastic unit 22. The plug-in terminal of the mating plug-in connection structure has the same structure, working principle and advantageous effect as the plug-in terminal according to the first aspect embodiment, which is not repeated here anymore.

In some embodiments, the connecting end 10 is made of aluminum or aluminum alloy, and the plug-in end 20 is made of copper or copper alloy; the mating terminal 30 includes a contact segment 31 and a connection segment 32 connected to each other, the contact segment 31 is made of copper or copper alloy, the connection segment 32 is made of aluminum or aluminum alloy, the contact segment 31 is inserted into the expansion and contraction insertion hole 223, an outer wall of the contact segment 31 is in close contact with an inner wall of the elastic unit 22, and the connection segment 32 is located outside the expansion and contraction insertion hole 223.

As illustrated in FIG. 2, in use, the connecting end 10 of the plug-in terminal made of aluminum/aluminum alloy can be connected directly to an aluminum wire, the connection segment 32 of the mating terminal 30 made of aluminum/aluminum alloy can also be connected directly to an aluminum wire, and the plug-in end 20 of the plug-in terminal made of copper/copper alloy is directly connected to the contact segment 31 of the mating terminal 30 made of copper/copper alloy.

As illustrated in FIG. 2, further, the contact segment 31 and the connection segment 32 are connected together by one or more of a friction welding, an ultrasonic welding, an arc welding, a laser welding and a resistance welding.

As illustrated in FIG. 2, further, a front end of the contact segment 31 is also provided with an insulating protective cap 50.

In another embodiments, the connecting end 10 is made of aluminum or aluminum alloy, and the plug-in end 20 is made of copper or copper alloy; the mating terminal 30 includes a contact segment 31 and a connection segment 32 connected to each other, the mating terminal 30 is made of copper or copper alloy, the contact segment 31 is inserted into the expansion and contraction insertion hole 223, an outer wall of the contact segment 31 is in close contact with an inner wall of the elastic unit 22, and the connection segment 32 is located outside the expansion and contraction insertion hole 223.

As illustrated in FIG. 2, in use, the connecting end 10 of the plug-in terminal made of aluminum/aluminum alloy can be connected directly to an aluminum wire, the connection segment 32 of the mating terminal 30 made of copper/ copper alloy can be connected directly to a copper wire, so as to achieve a connection of the copper wire and the aluminum wire, and the plug-in end 20 of the plug-in terminal made of copper/copper alloy is directly connected to the contact segment 31 of the mating terminal 30 made of copper/copper alloy.

In some embodiments, as illustrated in FIG. 11, the a front end of the mating terminal 30 is provided with a positioning hole 51, and a positioning pin 52 is provided in the expansion and contraction insertion hole 223 of the plug-in terminal, the positioning pin 52 is mutually plugged in with the positioning hole 51 of the mating terminal 30, such that the long mating terminal 30 is positioned inside the plug-in terminal and the front end of the mating terminal 30 is prevented from shaking inside the expansion and contraction insertion hole of the plug-in terminal due to vibration, which prevents changes in contact resistance due to shaking and maintains current stability in the plug-in structure, also avoids a short circuit due to excessive shaking of the mating terminal 30 leading to a mutual contact between the cables connected at a rear end, and reduces the probability of short circuit accidents and personnel electric shock injuries.

In some embodiments, as illustrated in FIG. 9, each of the elastic pieces 222 extends in a corrugated shape in a lengthwise direction, and an outer wall surface of the mating terminal 30 extends in a corrugated shape in an axial direction to attach to the elastic pieces 222. Providing the elastic pieces 222 in a corrugated structure not only increases the contact area between the elastic pieces 222 and the mating terminal 30, enhances the electrical properties of the plug-in terminal, but also plays an axial positioning effect on the mating terminal 30, prevents the mating terminal from being unplugged from the expansion and contraction insertion hole, and improves the safety and reliability.

In some embodiments, an outer diameter of a part of the mating terminal plugged into the expansion and contraction insertion hole 223 is r1, and a minimum inner diameter of the expansion and contraction insertion hole 223 is r2, (r1-r2)/r1*100%=N, and 0.5%≤N≤20%. That is to say, r1 is less than r2, thus the expansion and contraction insertion hole 223 more strongly grips the mating terminal due to the tension of the metal after insertion.

To test the effect of N value on the gripping force and contact resistance between the terminals, the inventors select 10 sets of terminals with different N values for testing. The test results are shown in Table 7.

The method for testing the gripping force of the plug-in terminals includes: attaching a slice piezoelectric dynamometer to the mating terminal 30, so that the outer diameter of the mating terminal 30 attached with the slice piezoelectric dynamometer is r1, plugging in the plug-in terminal with the mating terminal 30, obtaining and taking the value on the slice piezoelectric dynamometer as the gripping force of the plug-in terminal. In this embodiment, the gripping force less than 30N is an ideal value.

The method for testing the contact resistance of the plug-in terminals includes: measuring the resistance at a contact position between the plug-in terminal and the mating terminal 30 using a micro-resistance measurer, and obtaining and taking the value on the micro-resistance measurer as the contact resistance between the plug-in terminal and the mating terminal 30. In this embodiment, the contact resistance less than 50µΩ is an ideal value.

**Table 7 effects of different values of n on the gripping force and contact resistance of plug-in terminal**

| N value | 0.4% | 0.5% | 2% | 5% | 10% | 15% | 20% | 22% | 25% | 27% |
|---|---|---|---|---|---|---|---|---|---|---|
| gripping force (N) | 24 | 31 | 36 | 39 | 42 | 45 | 48 | non-pluggable | non-pluggable | non-pluggable |
| contact resistance (µΩ) | 59 | 48 | 43 | 38 | 30 | 26 | 20 | - | - | - |

As can be seen from the Table 7, in a case where the value of N is less than 0.5%, the gripping force between the terminals is too small and less than the desired ideal value, thus the plugging in between the terminals is unstable, and the contact resistance between terminals is too high and exceeds the desired ideal value, thereby resulting in excessive temperature rise of the mating plug-in connection mechanism, reducing the safety of the mating plug-in connection mechanism, and reducing the service life of the electricity-consumption device. In a case where the value of N is greater than 20%, the mating terminal 30 cannot be plugged for normal conductivity since the inner diameter of the expansion and contraction insertion hole 223 significantly differs from the outer diameter of the mating terminal 30. Therefore, the inventors select the value of N ranging from 0.5% to 20%, which ensures that the plug-in terminal is easily plugged into the mating terminal 30, and also ensures that the gripping force and contact resistance between the plug-in terminal and the mating terminal 30 meet the requirements of the ideal value, greatly ensures the mechanical properties and electrical properties of the mating plug-in connection mechanism, and prolongs the service life of the electricity-consumption device.

In a case where the inner diameter of the expansion and contraction insertion hole 223 is uneven, such as in a case where the cross-sectional area of the inner hole of the expansion and contraction insertion hole 223 on the side close to the fixing unit 21, is greater than the cross-sectional area of the inner hole on the opening end of the elastic unit 22, r2 is a minimum inner diameter of the expansion and contraction insertion hole 223.

A third aspect embodiment according to the present disclosure provides a plug-in terminal assembly, including a plug-in terminal according to the first aspect embodiment and a temperature sensor provided on the plug-in terminal.

The plug-in terminal is provided with a through-hole 60, as illustrated in FIG. 10, the temperature sensor is provided inside the through-hole 60. The temperature sensor may be mounted at the through-hole of any part of the terminal, and the temperature sensor may be mounted in three directions such as XYZ.

This solution enables the temperature measurement precision to be close to or equal to a theoretical absolute value with very high detection precision and fast output capability.

The temperature sensor is partly or entirely provided inside the through-hole 60.

The temperature sensor is in interference fit with the through-hole 60.

An outer wall of the temperature sensor is provided with an external thread, the through-hole 60 is provided with an internal thread, and the temperature sensor is threaded connection to the through-hole 60. The temperature sensor may be mounted and then connected to a transmission cable.

A shielding layer is provided outside the temperature sensor, to shield the interference of external magnetic fields on the temperature sensor, ensure that the signal transmitted by the temperature sensor is stable and not distorted, and further ensure the accuracy of the data.

The temperature sensor is an NTC temperature sensor or a PTC temperature sensor. Advantages of using these two temperature sensors are that the sensors have a small volume and be able to measure gaps that other thermometers cannot measure; user friendly, where resistance values can be selected from 0.1 to 100kΩ; easily machined in complex shapes and mass-produced with good stability and strong overload capacity, suitable for a product that requires a small volume and stable performance such as an adapter.

The through-hole 60 is provided on the fixing unit 21.

In some embodiments, a temperature obtainment device is provided: an output module includes: a programmable controller, a transmission unit and a power supply, the temperature sensor is electrically connected to the programmable controller, and the transmission unit wirelessly (or wiredly) sends temperature information obtained by the programmable controller.

Furthermore, in some embodiments, a temperature obtainment system is provided: an obtainment terminal obtains temperature information by an information receiving device, a storage unit is configured to store the temperature information, and a comparison unit is configured to compare the temperature information with preset safety information. If the obtained information is beyond the preset information, the obtainment terminal notifies the staff of an alarm by an alarm unit. A plurality of obtainment terminals are remotely connected to a server, the server monitors all obtained temperature information and may also send temperature information to a mobile terminal for the staff to know the temperature information of each terminal in a working area anytime and anywhere.

Those described above are just the embodiments of the present disclosure, rather than limitations thereto. For those skilled in the art, the embodiments of the present disclosure may have various amendments or variations.

## Claims

1. A plug-in terminal, comprising: a connecting end (10) and a plug-in end (20);
the plug-in end (20) comprises: a fixing unit (21) and an elastic unit (22), and the fixing unit (21) is configured to be provided on a coupling device (40);
the connecting end (10) comprises two ends, the one end of the connecting end (10) is electrically connectable to a cable, and the other end of the connecting end (10) is connected to the fixing unit (21); and
the elastic unit (22) is provided with an expansion and contraction insertion hole (223) for plugging in and electrical connection with a mating terminal (30),
wherein the elastic unit (22) comprises an expansion and contraction joint (221) of the plug-in terminal extending in a longitudinal direction, and the expansion and contraction joint (221) divides the elastic unit (22) into elastic pieces (222), wherein a thickness of the elastic pieces (222) on the open side of the elastic unit (22) is greater than that on the side close to the fixing unit (21), wherein grooves (224), which are arranged circumferentially, are provided outside the elastic unit (22), and correspond to the expansion and contraction insertion hole (223), and the plug-in terminal further comprises an elastic kit (225) sleeved on the grooves (224), and side walls on both sides of the grooves (224) on the elastic pieces (222) protrude above the surface of the elastic pieces (222),
**characterized in that** each of the elastic pieces (222) extends in a corrugated shape in a lengthwise direction.

2. The plug-in terminal according to claim 1, wherein the connecting end (10) is made of aluminum or aluminum alloy and the plug-in end (20) is made of copper or copper alloy;
preferably wherein
the connecting end (10) and the fixing unit (21) are connected together by one or more of a friction welding, an ultrasonic welding, an arc welding, a laser welding and a resistance welding.

3. The plug-in terminal according to claim 1, wherein the elastic unit (22) comprises a copper segment and an aluminum segment, one end of the aluminum segment is fixedly connected to the copper segment and the other end of the aluminum segment is connected to the fixing unit (21);
preferably wherein a length of the copper segment accounts for 0.5%-99.9% of an overall length of the elastic unit (22).

4. The plug-in terminal according to claim 1,
wherein a width of the expansion and contraction joint (221) on a side close to the fixing unit (21) is greater than or equal to that on an open side of the elastic unit (22);
or
wherein a minimum width of the expansion and contraction joint (221) ranges from 0.01mm to 12mm, preferably wherein a minimum width of the expansion and contraction joint (221) ranges from 0.1mm to 10mm;
or
wherein a number of the elastic pieces (222) is 4, 6, 8 ,10, 12, 14 or 16.

5. The plug-in terminal according to claim 1, wherein the expansion and contraction insertion hole (223) of the elastic unit (22) has a cross-sectional area of an inner hole on the side close to the fixing unit (21) larger than that on the open side of the elastic unit (22);
or
wherein a cross-sectional shape of the inner hole of the expansion and contraction insertion hole (223) of the elastic unit (22) is circular, elliptical, polygonal, flat, E-shaped, F-shaped, H-shaped, K-shaped, L-shaped, T-shaped, U-shaped, V-shaped, W-shaped, X-shaped, Y-shaped, Z-shaped, semi arc-shaped, arc-shaped or wavy;
or
wherein the open side of the elastic unit (22) is internally provided with a chamfer or a rounding;
or
wherein the connecting end (10) and the plug-in end (20) are integrally molded;
or
wherein the connecting end (10) and the plug-in end (20) are connected by crimping, snapping, threaded connection, welding, riveting or embedding;
or
wherein the connecting end (10) is in a plate-like structure or a U-shaped structure or a superior-arc-shaped structure or a cylindrical structure or a bowl-shaped structure or a polygonal structure.

6. The plug-in terminal according to claim 1, wherein a positioning pin (52) is provided in the expansion and contraction insertion hole (223), and the positioning pin (52) is configured for mutual plugging in with a positioning hole (51) at a front end of the mating terminal (30);
preferably wherein
the positioning pin (52) is arranged along an axial direction of the expansion and contraction insertion hole (223), and the positioning pin (52) is fixed on an end wall of the expansion and contraction insertion hole (223), the positioning pin (52) has a bottom portion connected to the end wall and a top portion, and a cross-sectional area of the top portion is smaller than or equal to that of the bottom portion.

7. The plug-in terminal according to any one of claims 1 to 6, wherein a material of the connecting end (10) and/or the plug-in end (20) contains tellurium;
preferably wherein
the tellurium in the material of the connecting end (10) and/or the plug-in end (20) has a content of 0.1%-5 %.

8. The plug-in terminal according to any one of claims 1-6, wherein the connecting end (10) and/or the plug-in end (20) has a plating layer.

9. The plug-in terminal according to claim 8, wherein the plating layer on the connecting end (10) and/or the plug-in end (20) has a uniform thickness;
or
wherein the plating layer on the connecting end (10) is inconsistent with that on the plug-in end (20) in material;
or
wherein the plating layer is made of one or more of gold, silver, nickel, tin, zinc, tin-lead alloys, silver-antimony alloys, palladium, palladium-nickel alloys, graphite silver, graphene silver and silver-gold-zirconium alloys.

10. The plug-in terminal according to claim 8, wherein the plating layer comprises: an underlying layer and a surface layer.

11. The plug-in terminal according to claim 10, wherein the underlying layer is made of one or more of gold, silver, nickel, tin, tin-lead alloys and zinc; and the surface layer is made of one or more of gold, silver, nickel, tin, tin-lead alloys, silver-antimony alloys, palladium, palladium-nickel alloys, graphite silver, graphene silver and silver-gold-zirconium alloys;
or
wherein the underlying layer has a thickness of 0.01µm-15µm;
or
wherein the underlying layer has a thickness of 0.1µm-9µm;
or
wherein the surface layer has a thickness of 0.5µm-55µm;
or
wherein the surface layer has a thickness of 1µm-35µm.

12. A mating plug-in connection structure, wherein the mating plug-in connection structure comprises: a plug-in terminal according to any one of claims 1 to 11 and a mating terminal (30), the mating terminal (30) is plugged into the expansion and contraction insertion hole (223), and an outer sidewall of the mating terminal (30) is in close contact with an inner sidewall of the elastic unit (22).

13. The mating plug-in connection structure according to claim 12,
wherein the connecting end (10) is made of aluminum or aluminum alloy, and the plug-in end (20) is made of copper or copper alloy; the mating terminal (30) comprises a contact segment (31) and a connection segment (32) connected to each other, the contact segment is made of copper or copper alloy, the connection segment (32) is made of aluminum or aluminum alloy, the contact segment (31) is inserted into the expansion and contraction insertion hole (223), an outer wall of the contact segment (31) is in close contact with an inner wall of the elastic unit (22), and the connection segment (32) is located outside the expansion and contraction insertion hole (223), preferably wherein the contact segment (31) and the connection segment (32) are connected together by one or more of a friction welding, an ultrasonic welding, an arc welding, a laser welding method and a resistance welding;
or
wherein the connecting end (10) is made of aluminum or aluminum alloy, and the plug-in end (20) is made of copper or copper alloy; the mating terminal (30) comprises a contact segment (31) and a connection segment (32) connected to each other, the mating terminal (30) is made of copper or copper alloy, the contact segment (31) is inserted into the expansion and contraction insertion hole (223), and an outer wall of the contact segment (31) is in close contact with an inner wall of the elastic unit (22), and the connection segment (32) is located outside the expansion and contraction insertion hole (223);
or
wherein a front end of the mating terminal (30) is provided with a positioning hole (51), the expansion and contraction insertion hole (223) of the plug-in terminal is provided with a positioning pin (52) for mutual plugging in with the positioning hole (51) of the mating terminal (30);
or
wherein an outer wall surface of the mating terminal (30) extends in a corrugated shape in an axial direction, and an outer wall surface of the mating terminal (30) is attached to the elastic pieces (222);
or
wherein an outer diameter of a part of the mating terminal (30) plugged into the expansion and contraction insertion hole (223) is r1, and a minimum inner diameter of the expansion and contraction insertion hole (223) is r2, (r1-r2)/r1*100%=N, and 0.5%≤N≤20%.

14. A plug-in terminal assembly, comprising a plug-in terminal according to any one of claims 1 to 11and a temperature sensor provided on the plug-in terminal.

## Patentansprüche

1. Steckanschluss, umfassend: ein Verbindungsende (10) und ein Einsteckende (20);
wobei das Einsteckende (20) umfasst: eine Befestigungseinheit (21) und eine elastische Einheit (22), und wobei die Befestigungseinheit (21) dafür konfiguriert ist, an einer Kupplungsvorrichtung (40) bereitgestellt zu werden;
wobei das Verbindungsende (10) zwei Enden umfasst, wobei das eine Ende des Verbindungsendes (10) mit einem Kabel elektrisch verbindbar ist und das andere Ende des Verbindungsendes (10) mit der Befestigungseinheit (21) verbunden ist; und
wobei die elastische Einheit (22) mit einem Dehnungs- und Schwindeinführungsloch (223) zum Einstecken und zur elektrischen Verbindung mit einem Gegenanschluss (30) versehen ist,
wobei die elastische Einheit (22) eine Dehnungs- und Schwindfuge (221) des Steckanschlusses umfasst, die sich in Längsrichtung erstreckt, und die Dehnungs- und Schwindfuge (221) die elastische Einheit (22) in elastische Stücke (222) teilt, wobei eine Dicke der elastischen Stücke (222) auf der offenen Seite der elastischen Einheit (22) größer ist als diejenige auf der Seite, die der Befestigungseinheit (21) nahe ist, wobei Nuten (224), die in Umfangsrichtung angeordnet sind, außerhalb der elastischen Einheit (22) bereitgestellt sind und dem Dehnungs- und Schwindeinführungsloch (223) entsprechen, und wobei der Steckanschluss ferner einen elastischen Einsatz (225) umfasst, der auf die Nuten (224) aufgeschoben ist, und Seitenwände auf beiden Seiten der Nuten (224) an den elastischen Stücken (222) über die Oberfläche der elastischen Stücke (222) hinausragen,
**dadurch gekennzeichnet, dass** jedes der elastischen Stücke (222) sich wellenförmig in Längsrichtung erstreckt.

2. Steckanschluss nach Anspruch 1, wobei das Verbindungsende (10) aus Aluminium oder einer Aluminiumlegierung hergestellt ist und das Einsteckende (20) aus Kupfer oder einer Kupferlegierung hergestellt ist;
wobei vorzugsweise:
das Verbindungsende (10) und die Befestigungseinheit (21) durch eines oder mehr von einem Reibschweißen, einem Ultraschallschweißen, einem Lichtbogenschweißen, einem Laserschweißen und einem Widerstandsschweißen miteinander verbunden sind.

3. Steckanschluss nach Anspruch 1, wobei die elastische Einheit (22) ein Kupfersegment und ein Aluminiumsegment umfasst, wobei ein Ende des Aluminiumsegments fest mit dem Kupfersegment verbunden ist und das andere Ende des Aluminiumsegments mit der Befestigungseinheit (21) verbunden ist;
wobei vorzugsweise eine Länge des Kupfersegments 0,5 % bis 99,9 % einer Gesamtlänge der elastischen Einheit (22) ausmacht.

4. Steckanschluss nach Anspruch 1,
wobei eine Breite der Dehnungs- und Schwindfuge (221) auf einer Seite, die der Befestigungseinheit (21) nahe ist, größer oder gleich diejenige auf einer offenen Seite der elastischen Einheit (22) ist;
oder
wobei eine Mindestbreite der Dehnungs- und Schwindfuge (221) im Bereich von 0,01 mm bis 12 mm liegt, wobei vorzugsweise eine Mindestbreite der Dehnungs- und Schwindfuge (221) im Bereich von 0,1 mm bis 10 mm liegt;
oder
wobei eine Anzahl der elastischen Stücke (222) 4, 6, 8, 10, 12, 14 oder 16 beträgt.

5. Steckanschluss nach Anspruch 1, wobei das Dehnungs- und Schwindeinführungsloch (223) der elastischen Einheit (22) eine Querschnittsfläche eines inneren Lochs auf der Seite, die der Befestigungseinheit (21) nahe ist, aufweist, die größer als diejenige auf der offenen Seite der elastischen Einheit (22) ist;
oder
wobei die Querschnittsform des inneren Lochs des Dehnungs- und Schwindeinführungslochs (223) der elastischen Einheit (22) kreisförmig, elliptisch, vieleckig, flach, E-förmig, F-förmig, H-förmig, K-förmig, L-förmig, T-förmig, U-förmig, V-förmig, W-förmig, X-förmig, Y-förmig, Z-förmig, halbkreisbogenförmig, bogenförmig oder wellenförmig ist;
oder
wobei die offene Seite der elastischen Einheit (22) innen mit einer Fase oder einer Abrundung versehen ist;
oder
wobei das Verbindungsende (10) und das Einsteckende (20) einstückig geformt sind;
oder
wobei das Verbindungsende (10) und das Steckende (20) durch Crimpen, Einschnappen, Schraubverbindung, Schweißen, Nieten oder Einbetten verbunden sind;
oder
wobei das Verbindungsende (10) in einer plattenartigen Struktur, einer U-förmigen Struktur, einer oberbogenförmigen Struktur, einer zylindrischen Struktur oder einer schalenförmigen Struktur oder einer Vieleckstruktur vorliegt.

6. Steckanschluss nach Anspruch 1, wobei in dem Dehnungs- und Schwindeinführungsloch (223) ein Positionierstift (52) bereitgestellt ist und der Positionierstift (52) für das gegenseitige Zusammenstecken mit einem Positionierloch (51) an einem Vorderende des Gegenanschlusses (30) konfiguriert ist;
wobei vorzugsweise:
der Positionierstift (52) entlang einer Axialrichtung des Dehnungs- und Schwindeinführungslochs (223) angeordnet ist und der Positionierstift (52) an einer Stirnwand des Dehnungs- und Schwindeinführungslochs (223) befestigt ist, wobei der Positionierstift (52) einen mit der Stirnwand verbundenen unteren Abschnitt und einen oberen Abschnitt aufweist und eine Querschnittsfläche des oberen Abschnitts kleiner oder gleich derjenigen des unteren Abschnitts ist.

7. Steckanschluss nach einem der Ansprüche 1 bis 6, wobei ein Material des Verbindungsendes (10) und/oder des Einsteckendes (20) Tellur enthält;
wobei vorzugsweise:
das Tellur im Material des Verbindungsendes (10) und/oder des Einsteckendes (20) einen Anteil von 0,1 % bis 5 % aufweist.

8. Steckanschluss nach einem der Ansprüche 1-6, wobei das Verbindungsende (10) und/oder das Einsteckende (20) eine Plattierungsschicht aufweist.

9. Steckanschluss nach Anspruch 8, wobei die Plattierungsschicht auf dem Verbindungsende (10) und/oder dem Einsteckende (20) eine gleichmäßige Dicke aufweist;
oder
wobei die Plattierungsschicht auf dem Verbindungsende (10) im Material nicht mit derjenigen auf dem Einsteckende (20) konsistent ist;
oder
wobei die Plattierungsschicht aus einem oder mehreren von Gold, Silber, Nickel, Zinn, Zink, Zinn-Blei-Legierungen, Silber-Antimon-Legierungen, Palladium, Palladium-Nickel-Legierungen, Graphit-Silber, Graphen-Silber und Silber-Gold-Zirkonium-Legierungen hergestellt ist.

10. Steckanschluss nach Anspruch 8, wobei die Plattierungsschicht umfasst: eine Untergrundschicht und eine Oberflächenschicht.

11. Steckanschluss nach Anspruch 10, wobei die Untergrundschicht aus einem oder mehreren von Gold, Silber, Nickel, Zinn, Zinn-Blei-Legierungen und Zink hergestellt ist; und die Oberflächenschicht aus einem oder mehreren von Gold, Silber, Nickel, Zinn, Zinn-Blei-Legierungen, Silber-Antimon-Legierungen, Palladium, Palladium-Nickel-Legierungen, Graphit-Silber, Graphen-Silber und Silber-Gold-Zirkonium-Legierungen hergestellt ist;
oder
wobei die Untergrundschicht eine Dicke von 0,01 µm bis 15 µm aufweist;
oder
wobei die Untergrundschicht eine Dicke von 0,1 µm bis 9 µm aufweist;
oder
wobei die Oberflächenschicht eine Dicke von 0,5 µm bis 55 µm aufweist;
oder
wobei die Oberflächenschicht eine Dicke von 1 µm bis 35 µm aufweist.

12. Gegensteckverbindungsstruktur, wobei die Gegensteckverbindungsstruktur umfasst: einen Steckanschluss nach einem der Ansprüche 1 bis 11 und einen Gegenanschluss (30), wobei der Gegenanschluss (30) in das Dehnungs- und Schwindeinführungsloch (223) eingesteckt wird, und
eine äußere Seitenwand des Gegenanschlusses (30) in engem Kontakt mit einer inneren Seitenwand der elastischen Einheit (22) ist.

13. Gegensteckverbindungsstruktur nach Anspruch 12,
wobei das Verbindungsende (10) aus Aluminium oder einer Aluminiumlegierung hergestellt ist und das Einsteckende (20) aus Kupfer oder einer Kupferlegierung hergestellt ist; der Gegenanschluss (30) ein Kontaktsegment (31) und ein Verbindungssegment (32), die miteinander verbunden sind, umfasst, wobei das Kontaktsegment aus Kupfer oder einer Kupferlegierung hergestellt ist, das Verbindungssegment (32) aus Aluminium oder einer Aluminiumlegierung hergestellt ist, das Kontaktsegment (31) in das Dehnungs- und Schwindeinführungsloch (223) eingeführt ist, eine Außenwand des Kontaktsegments (31) in engem Kontakt mit einer Innenwand der elastischen Einheit (22) ist und das Verbindungssegment (32) sich außerhalb des Dehnungs- und Schwindeinführungslochs (223) befindet, wobei vorzugsweise das Kontaktsegment (31) und das Verbindungssegment (32) durch eines oder mehrere von einem Reibschweißen, einem Ultraschallschweißen, einem Lichtbogenschweißen, einem Laserschweißverfahren und einem Widerstandsschweißen miteinander verbunden sind;
oder
wobei das Verbindungsende (10) aus Aluminium oder einer Aluminiumlegierung hergestellt ist und das Einsteckende (20) aus Kupfer oder einer Kupferlegierung hergestellt ist; wobei der Gegenanschluss (30) ein Kontaktsegment (31) und ein Verbindungssegment (32), die miteinander verbunden sind, umfasst; wobei der Gegenanschluss (30) aus Kupfer oder einer Kupferlegierung hergestellt ist; wobei das Kontaktsegment (31) in das Dehnungs- und Schwindeinführungsloch (223) eingeführt ist und eine Außenwand des Kontaktsegments (31) in engem Kontakt mit einer Innenwand der elastischen Einheit (22) ist und das Verbindungssegment (32) sich außerhalb des Dehnungs- und Schwindeinführungslochs (223) befindet;
oder
wobei ein Vorderende des Gegenanschlusses (30) mit einem Positionierloch (51) versehen ist, wobei das Dehnungs- und Schwindeinführungsloch (223) des Steckanschlusses mit einem Positionierstift (52) zum gegenseitigen Zusammenstecken mit dem Positionierloch (51) des Gegenanschlusses (30) versehen ist;
oder
wobei eine Außenwandfläche des Gegenanschlusses (30) sich wellenförmig in Axialrichtung erstreckt und eine Außenwandfläche des Gegenanschlusses (30) an den elastischen Stücken (222) angebracht wird;
oder
wobei ein Außendurchmesser eines Teils des Gegenanschlusses (30), der in das Dehnungs- und Schwindeinführungsloch (223) eingesteckt wird, r1 ist und ein minimaler Innendurchmesser des Dehnungs- und Schwindeinführungslochs (223) r2 ist, wobei (r1-r2)/r1 * 100 % = N und 0,5 %≤N≤ 20 %.

14. Steckanschluss-Baugruppe, umfassend einen Steckanschluss nach einem der Ansprüche 1 bis 11 und einen Temperatursensor, der an dem Steckanschluss bereitgestellt ist.

## Revendications

1. Borne enfichable, comprenant : une extrémité de liaison (10) et une extrémité enfichable (20) ;
l'extrémité enfichable (20) comprend : une unité de fixation (21) et une unité élastique (22), et l'unité de fixation (21) est configurée pour être fournie sur un dispositif de couplage (40) ;
l'extrémité de liaison (10) comprend deux extrémités : une extrémité de l'extrémité de liaison (10) peut être reliée électriquement à un câble, et l'autre extrémité de l'extrémité de liaison (10) est reliée à l'unité de fixation (21) ; et
l'unité élastique (22) est munie d'un trou d'insertion de dilatation et de contraction (223) pour l'enfichage et la liaison électrique avec une borne d'accouplement (30),
dans laquelle l'unité élastique (22) comprend un joint de dilatation et de contraction (221) de la borne enfichable s'étendant dans un sens longitudinal, et le joint de dilatation et de contraction (221) divise l'unité élastique (22) en pièces élastiques (222), dans laquelle une épaisseur des pièces élastiques (222) du côté ouvert de l'unité élastique (22) est supérieure à celle du côté proche de l'unité de fixation (21), dans laquelle des rainures (224), agencées circonférentiellement, sont prévues à l'extérieur de l'unité élastique (22) et correspondant à le trou d'insertion de dilatation et de contraction (223), et la borne enfichable comprend en outre un kit élastique (225) emmanché sur les rainures (224), et des parois latérales des deux côtés des rainures (224) sur les pièces élastiques (222) font saillie au-dessus de la surface des pièces élastiques (222),
**caractérisée en ce que** chacune des pièces élastiques (222) s'étend en forme ondulée dans un sens de la longueur.

2. Borne enfichable selon la revendication 1, dans laquelle l'extrémité de liaison (10) est en aluminium ou en alliage d'aluminium et l'extrémité enfichable (20) est en cuivre ou en alliage de cuivre ;
de préférence dans laquelle
l'extrémité de liaison (10) et l'unité de fixation (21) sont reliées l'une à l'autre par un ou plusieurs parmi un soudage par friction, un soudage par ultrasons, un soudage à l'arc, un soudage laser et un soudage par résistance.

3. Borne enfichable selon la revendication 1, dans laquelle l'unité élastique (22) comprend un segment en cuivre et un segment en aluminium, une extrémité du segment en aluminium est reliée fixement au segment en cuivre et l'autre extrémité du segment en aluminium est reliée fixement à l'unité de fixation (21) ;
de préférence dans laquelle une longueur du segment en cuivre représente 0,5 % à 99,9 % d'une longueur totale de l'unité élastique (22).

4. Borne enfichable selon la revendication 1,
dans laquelle une largeur du joint de dilatation et de contraction (221) d'un côté proche de l'unité de fixation (21) est supérieure ou égale à celle d'un côté ouvert de l'unité élastique (22) ;
ou
dans laquelle une largeur minimale du joint de dilatation et de contraction (221) varie de 0,01 mm à 12 mm, de préférence dans laquelle une largeur minimale du joint de dilatation et de contraction (221) varie de 0,1 mm à 10 mm ;
ou
dans laquelle un nombre de pièces élastiques (222) est 4, 6, 8, 10, 12, 14 ou 16.

5. Borne enfichable selon la revendication 1, dans laquelle le trou d'insertion de dilatation et de contraction (223) de l'unité élastique (22) présente une aire de section transversale d'un trou intérieur du côté proche de l'unité de fixation (21) plus grande que celle du côté ouvert de l'unité élastique (22) ;
ou
dans laquelle la forme de section transversale du trou intérieur du trou d'insertion de dilatation et de contraction (223) de l'unité élastique (22) est circulaire, elliptique, polygonale, plate, en forme de E, en forme de F, en forme de H, en forme de K, en forme de L, en forme de T, en forme de U, en forme de V, en forme de W, en forme de X, en forme de Y, en forme de Z, en forme de demi-arc, en forme d'arc ou ondulée ;
ou
dans laquelle le côté ouvert de l'unité élastique (22) est muni intérieurement d'un chanfrein ou d'un arrondi ;
ou
dans laquelle l'extrémité de liaison (10) et l'extrémité enfichable (20) sont moulées d'un seul tenant ;
ou
dans laquelle l'extrémité de liaison (10) et l'extrémité enfichable (20) sont reliées par sertissage, encliquetage, liaison filetée, soudage, rivetage ou intégration ;
ou
dans laquelle l'extrémité de liaison (10) est dans une structure en forme de plaque ou dans une structure en forme de U ou dans une structure en forme d'arc supérieur ou dans une structure cylindrique ou dans une structure en forme de bol ou dans une structure polygonale.

6. Borne enfichable selon la revendication 1, dans laquelle une broche de positionnement (52) est prévue dans le trou d'insertion de dilatation et de contraction (223), et la broche de positionnement (52) est configurée pour l'enfichage mutuel avec un trou de positionnement (51) à une extrémité avant de la borne d'accouplement (30) ;
de préférence dans laquelle
la broche de positionnement (52) est agencée selon un sens axial du trou d'insertion de dilatation et de contraction (223), et la broche de positionnement (52) est fixée sur une paroi d'extrémité du trou d'insertion de dilatation et de contraction (223), la broche de positionnement (52) présente une partie inférieure reliée à la paroi d'extrémité et une partie supérieure, et une aire de section transversale de la partie supérieure est inférieure ou égale à celle de la partie inférieure.

7. Borne enfichable selon l'une quelconque des revendications 1 à 6, dans laquelle un matériau de l'extrémité de liaison (10) et/ou de l'extrémité enfichable (20) contient du tellure ;
de préférence dans laquelle
le tellure dans le matériau de l'extrémité de liaison (10) et/ou dans l'extrémité enfichable (20) présente un contenu de 0,1 % à 5 %.

8. Borne enfichable selon l'une quelconque des revendications 1-6, dans laquelle l'extrémité de liaison (10) et/ou l'extrémité enfichable (20) présentent une couche de placage.

9. Borne enfichable selon la revendication 8, dans laquelle la couche de placage sur l'extrémité de liaison (10) et/ou l'extrémité enfichable (20) présente une épaisseur uniforme ;
ou
dans laquelle la couche de placage sur l'extrémité de liaison (10) n'est pas homogène avec celle sur l'extrémité enfichable (20) en termes de matériau ;
ou
dans laquelle la couche de placage est constituée d'un ou plusieurs parmi l'or, l'argent, le nickel, l'étain, le zinc, les alliage étain-plomb, les alliages argent-antimoine, le palladium, les alliages palladium-nickel, l'argent graphite, l'argent graphène, et les alliages argent-or-zirconium.

10. Borne enfichable selon la revendication 8, dans laquelle la couche de placage comprend : une couche sous-jacente et une couche de surface.

11. Borne enfichable selon la revendication 10, dans laquelle la couche sous-jacente est constituée d'un ou plusieurs parmi l'or, l'argent, le nickel, l'étain, les alliages étain-plomb et le zinc ; et la couche de surface est constituée d'un ou plusieurs parmi l'or, l'argent, le nickel, l'étain, les alliages étain-plomb, les alliages argent-antimoine, le palladium, les alliages palladium-nickel, l'argent graphite, l'argent graphène et les alliages argent-or-zirconium ;
ou
dans laquelle la couche sous-jacente présente une épaisseur de 0,01 µm à 15 µm ;
ou
dans laquelle la couche sous-jacente présente une épaisseur de 0,1 µm à 9 µm ;
ou
dans laquelle la couche de surface présente une épaisseur de 0,5 µm à 55 µm ;
ou
dans laquelle la couche de surface présente une épaisseur de 1 µm à 35 µm.

12. Structure de liaison enfichable d'accouplement, dans laquelle la structure de liaison enfichable d'accouplement comprend : une borne enfichable selon l'une quelconque des revendications 1 à 11 et une borne d'accouplement (30), la borne d'accouplement (30) est enfichée dans le trou d'insertion de dilatation et de contraction (223),
une paroi latérale extérieure de la borne d'accouplement (30) est en contact étroit avec une paroi latérale intérieure de l'unité élastique (22).

13. Structure de liaison enfichable d'accouplement selon la revendication 12,
dans laquelle l'extrémité de liaison (10) est en aluminium ou en alliage d'aluminium, et l'extrémité enfichable (20) est en cuivre ou en alliage de cuivre ; la borne d'accouplement (30) comprend un segment de contact (31) et un segment de liaison (32) reliés l'un à l'autre, le segment de contact est en cuivre ou en alliage de cuivre, le segment de liaison (32) est en aluminium ou en alliage d'aluminium, le segment de contact (31) est inséré dans le trou d'insertion de dilatation et de contraction (223), une paroi extérieure du segment de contact (31) est en contact étroit avec une paroi intérieure de l'unité élastique (22), et le segment de liaison (32) est situé à l'extérieur de le trou d'insertion de dilatation et de contraction (223), de préférence dans laquelle le segment de contact (31) et le segment de liaison (32) sont reliés l'un à l'autre par un ou plusieurs parmi un soudage par friction, un soudage par ultrasons, un soudage à l'arc, un procédé de soudage laser et un soudage par résistance ;
ou
dans laquelle l'extrémité de liaison (10) est en aluminium ou en alliage d'aluminium, et l'extrémité enfichable (20) est en cuivre ou en alliage de cuivre ; la borne d'accouplement (30) comprend un segment de contact (31) et un segment de liaison (32) reliés l'un à l'autre, la borne d'accouplement (30) est en cuivre ou en alliage de cuivre, le segment de contact (31) est inséré dans le trou d'insertion de dilatation et de contraction (223), et une paroi extérieure du segment de contact (31) est en contact étroit avec une paroi intérieure de l'unité élastique (22), et le segment de liaison (32) est situé à l'extérieur du trou d'insertion de dilatation et de contraction (223) ;
ou
dans laquelle une extrémité avant de la borne d'accouplement (30) est munie d'un trou de positionnement (51), le trou d'insertion de dilatation et de contraction (223) de la borne enfichable est muni d'une broche de positionnement (52) pour un enfichage mutuel avec le trou de positionnement (51) de la borne d'accouplement (30) ;
ou
dans laquelle une surface de paroi extérieure de la borne d'accouplement (30) s'étend en forme ondulée dans un sens axial, et une surface de paroi extérieure de la borne d'accouplement (30) est raccordée aux pièces élastiques (222) ;
ou
dans laquelle un diamètre extérieur d'une partie de la borne d'accouplement (30) enfichée dans le trou d'insertion de dilatation et de contraction (223) est r1, et un diamètre intérieur minimal du trou d'insertion de dilatation et de contraction (223) est r2, (r1-r2)/r1*100 %=N, et 0,5 %≤N≤20 %.

14. Ensemble de borne enfichable, comprenant une borne enfichable selon l'une quelconque des revendications 1 à 11 et un capteur de température prévu sur la borne enfichable.
